# EUROPEAN PATENT SPECIFICATION

(11) **EP 2 385 645 B1**
(45) Date of publication and mention of the grant of the patent: **03.10.2018**
(21) Application number: 11164598.2
(22) Date of filing: 03.05.2011
(51) Int. Cl.: H04L 1/00

(54) **Method for transmitting MIMO related information**
Verfahren zur Übertragung von MIMO-bezogenen Informationen
Procédé de transmission d'informations de type MIMO

(30) Priority: 04.05.2010 CN 201010163022; 27.08.2010 CN 201010272779; 14.10.2010 CN 201010526855
(43) Date of publication of application: 09.11.2011
(73) Proprietor: NTT DOCOMO, INC., Chiyoda-ku Tokyo (JP)
(72) Inventor: Zhu, Jianchi, 100190, Haidian District Beijing (CN); She, Xiaoming, 100190, Haidian District Beijing (CN); Chen, Lan, 100190, Haidian District Beijing (CN); Taoka, Hidekazu, Yokosuka-shi Kanagawa 239-8536 (JP); Suda, Hirohito, 100190, Haidian District Beijing (CN)
(74) Representative: Hoffmann Eitle

(56) References cited:
- WO-A1-2009/123522
- POTEVIO: "Discussion on DL Control Signaling for Dual-layer Beamforming", 3GPP DRAFT; R1-093441 DISCUSSION ON DL CONTROL SIGNALING FOR DUAL-LAYER BEAMFORMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 18 August 2009 (2009-08-18), XP050597622, [retrieved on 2009-08-18]
- TD TECH: "On control signaling for supporting the Dual-Layer Beamforming", 3GPP DRAFT; R1-094345 REVISED FROM R1-094009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388796, [retrieved on 2009-10-15]
- INTERDIGITAL COMMUNICATIONS ET AL: "DL Control Signalling for LTE Rel-9 Dual-Layer Beamforming", 3GPP DRAFT; R1-093884, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388388, [retrieved on 2009-10-05]

## Description

### Field of the Invention

The present invention relates to mobile communication technologies, and particularly, to a method for transmitting multiple input and multiple output (MIMO) related information in a long-term evolution-advanced (LTE-A) system.

### Background of the Invention

Cellular mobile phones bring a lot of convenience for people in communicating with each other. The second generation global system for mobile communication (GSM) adopts digital communications techniques, and greatly improves the quality of voice communication in mobile communications. The 3rd generation partnership project (3GPP), as an important organization in the mobile communication field, greatly accelerates the standardization process of the third generation (3G). 3GPP has set up a series of specifications for communication systems including the wide code division multiple Access (WCDMA), the high speed downlink packet access (HSDPA), the high speed uplink packet access (HSUPA), and etc.

To cope with challenges of broadband accessing techniques and to satisfy the ever-increasing demands for new types of services, 3GPP launched standardization work of 3G long term evolution (LTE) techniques in 2004, hoping to further improve frequency efficiency, to improve performances of users on cell edges, to reduce system delay, and to provide access services with higher speed for users moving at a high speed. LTE-A is based on the LTE, having spectrum bandwidth and data rate multiple times larger than that of the LTE, and is able to provide higher speed and higher quality of services for mobile users.

The LTE-A system supports multi-user (MU)-MIMO techniques, i.e., the LTE-A system can schedule multiple users at the same time on the same frequency resources. That is, in an LTE-A system, multiple users can share frequency resources, such as resource blocks (RB) and so on. The multiple UEs sharing the same frequency resources can be called a group of coordinated transmitting UEs participating in the MU-MIMO transmission.

Besides the common reference signal (CRS) inherited from the LTE release 8 (Rel-8), the LTE-A system also introduces two types of new reference signals (RS), including channel state information reference signal (CSI-RS) and demodulation reference signal (DM-RS). The DM-RS is used as reference signals for demodulating channel estimation.

In addition, LTE-A Rel-10 defines that an LTE-A system should support downlink MIMO satisfying the following conditions:
1) for orthogonal DM-RS which the SU-MIMO should support and when the SU-MIMO supports 1 to 8 layers (i.e., Rank) in total, when the Rank is 1 to 2, the DM-RS density is 12 resource elements (REs), and the length of orthogonal cover code (OCC) is 2; when the Rank is 3 to 4, the DM-RS is 24 REs, and the OCC length is 2; when the Rank is 5 to 8, the DM-RS density is 24 REs, and the OCC length is 4;
2) when the MU-MIMO should support at most 4 layers, each MU-MIMO supports at most 2 layers;
3) dynamic switching between SU-MIMO and MU-MIMO should be supported.

For the above downlink MIMO defined, current LTE-A specification does not provide a method for a base station transmitting information which is a must for performing data demodulation in a UE to the UE, thus the UE can not obtain the information necessary for the data demodulation and therefore can not perform the data demodulation. To facilitate description, information necessary for a UE to perform the data modulation is referred to as data demodulation information, among which information related to MIMO is referred to as MIMO related information. And the MIMO related information generally includes: the Rank (number of layers) of the UE, the DM-RS port (antenna port) of the UE, and DM-RS scrambling sequence index or scrambling identity (SCID) of the UE.

WO 2009/123522 A1 relates to a method for conveying precoding information in a control message from a first node to a second node, with information on properties of an associated wireless data transmission between the first and second nodes employing spatial multiplexing and precoding for the data transmission. The first node determines precoding parameters for signal transmission to the receiving node, optionally based on feedback reports from the receiving node.

POTEVIO: "Discussion on DL Control Signaling for Dual-layer Beamforming", 3GPP DRAFT relates to a proposal for DCI design. Accordingly, the document proposes to specify antenna port information using 2 bits.

TD TECH: "On control signaling for supporting the Dual-Layer Beamforming", 3GPP DRAFT relates to DCI format. According to the document, reusing DCI format 2A combined a new defined transmission mode 8 can support the dual-layer beamforming and the maximum number of PDCCH blind decodes in the same common search space and UE-specific search space design is kept as in Rel-8.

INTERDIGITAL COMMUNICATIONS ET AL: "DL Control Signalling for LTE Rel-9 Dual-Layer Beamforming", 3GPP DRAFT relates to control signalling issues for dual-layer beamforming. The document recommends, according to one proposal, that DCI format 1A is associated with transmit diversity only, DCI based on format 2A is associated with dual-layer beamforming and single-DRS port beamforming is used when one codeword is disabled.

### Summary of the Invention

The object of the invention is achieved by the subject-matter of the independent claims. Advantageous embodiments are defined in the dependent claims. Further examples are provided for facilitating the understanding of the invention.

A method for transmitting MIMO related information is provided, through which a base station can transmit MIMO related information needed by a UE to the UE with small overhead.

The method provided by examples of the present invention for transmitting MIMO related information may include:
encoding, by a base station, MIMO related information of a user equipment (UE), transmitting a downlink control signaling which includes a result of the encoding to the UE;
receiving, by the UE, the downlink control signaling transmitted by the base station, obtaining the result of the encoding, and obtaining the MIMO related information of the UE by decoding the result of the encoding.

In the above process, the encoding by the base station MIMO related information of the UE may include: encoding, by the base station, the MIMO related information to obtain a three-bit result of the encoding.

The transmitting the downlink control signaling which includes the result of the encoding to the UE may include: adding, by the base station, a MIMO information field of three bits in the downlink control signaling for bearing the result of the encoding; and loading, by the base station, the result of the encoding into the MIMO information field of the downlink control signaling, and transmitting the downlink control signaling to the UE.

Specifically, the adding by the base station a MIMO information field of three bits to the downlink control signaling may include: removing a scrambling code identity (SCID) field in the downlink control information (DCI) format 2B in the downlink control signaling, and adding a three-bit MIMO information field, and generating a new DCI format of the downlink control signaling.

Or, the transmitting the downlink control signaling which includes the result of the encoding to the UE may include: adding, by the base station, a MIMO information field with two bits to the downlink control signaling, the MIMO information field being uased together with a scrambling code identity (SCID) field to bear the result of the encoding; and loading, by the base station, the result of the encoding into the MIMO information field and the SCID field of the downlink control signaling, and transmitting the downlink control signaling to the UE.

Specifically, the adding by the base station the MIMO information field with two bits to the downlink control signaling comprises: adding the MIMO information field with a length of two bits in a downlink control information (DCI) format 2B of the downlink control signaling, and generating a new DCI format of the downlink control signaling.

When having four antenna ports, the encoding by the base station the MIMO related information may include: encoding, by the base station, the MIMO related information to obtain a result of the encoding in two bits.

The transmitting the downlink control signaling which includes the result of the encoding to the UE may include: adding, by the base station, a MIMO information field with two bits to the downlink control signaling to bear the result of the encoding; and loading, by the base station, the result of the encoding into the MIMO information field of the downlink control signaling, and transmitting the downlink control signaling to the UE.

Specifically, the adding by the base station the MIMO information field with two bits to the downlink control signaling includes: removing a scrambling code identity (SCID) field in a downlink control information (DCI) format 2B in the downlink control signaling, and adding the MIMO information field with a length of two bits, and generating a new DCI format of the downlink control signaling.

Or, the transmitting the downlink control signaling which includes the result of the encoding to the UE may include: adding, by the base station, a MIMO information field with one bit to the downlink control signaling, the MIMO information field being used together with a scrambling code identity (SCID) field to bear the result of the encoding; and loading, by the base station, the result of the encoding into the MIMO information field and the SCID field of the downlink control signaling, and transmitting the downlink control signaling to the UE.

Specifically, the adding by the base station the MIMO information field with one bit to the downlink control signaling includes: adding the MIMO information field with a length of one bit into a downlink control information (DCI) format 2B of the downlink control signaling, and generating a new DCI format of the downlink control signaling.

When dynamic switching between single-user (SU) and multi-user (MU) is supported, the base station transmits the MIMO related information to the UE via a downlink control information (DCI) format 2B of the downlink control signaling.

When the base station includes eight antenna ports, the encoding by the base station the MIMO related information includes: encoding, by the base station, the MIMO related information of the UE to obtain the result of the encoding in three bits and when the dynamic switching between the SU and the MU is not necessarily supported; the transmitting the downlink control signaling which includes the result of the encoding to the UE may include: adding, by the base station, a MIMO information field with three bits in the downlink control signaling to bear the result of the encoding; and loading, by the base station, the result of the encoding into the MIMO information field of the downlink control signaling, and transmitting the downlink control signaling to the UE. Specifically, the adding by the base station a MIMO information field with three bits to the downlink control signaling may include: removing a scrambling code identity (SCID) field in the DCI format 2B in the downlink control signaling, adding the MIMO information field with a length of three bits, and generating a new DCI format of the downlink control signaling.

When the base station includes four antenna ports, the encoding by the base station the MIMO related information includes: encoding, by the base station, the MIMO related information of the UE to obtain the result of the encoding in one bit when dynamic switching between SU and MU is not necessarily supported; the transmitting the downlink control signaling which includes the result of the encoding to the UE may include: adding, by the base station, a MIMO information field with a length of one bit into the downlink control signaling to bear the result of the encoding; loading, by the base station, the result of the encoding into the MIMO information field of the downlink control signaling, and transmitting the downlink control signaling to the UE. Specifically, the adding by the base station the MIMO information field with one bit to the downlink control signaling may include: removing a scrambling code identity (SCID) field in the DCI format 2B of the downlink control signaling, adding the MIMO information field with one bit, and generating a new DCI format of the downlink control signaling.

The method may further includes: when only one codeword of the UE is enabled, utilizing a new data indication (NDI) field corresponding to an disabled codeword for bearing the result of the encoding.

The method may further includes: when only one codeword of the UE is enabled and the Rank of the UE is larger than one, utilizing a new data indication (NDI) field corresponding to a disabled codeword to bear the result of the encoding.

The MIMO related information may include: the total number of layers (Rank) of the UE, a demodulation reference signal (DM-RS) port, and a scrambling code identity (SCID) of DM-RS. Or, the MIMO related information may further include a DM-RS density, the length of orthogonal cover code (OCC) or a transmission mode of the UE.

Examples of the present invention provide a method for transmitting MIMO related information which is applicable to an LTE-A system. Through the method, a base station may first encode MIMO related information of a UE, and loads a result of the encoding into downlink control signaling to be transmitted to the UE. By adopting the method, a base station is enabled to transmit MIMO related information required by a UE to the UE with small signaling overhead.

### Brief Description of the Drawings

Fig. 1 is a flowchart illustrating a method for transmitting MIMO related information in accordance with the present invention;
Fig. 2 is a flowchart illustrating a method for transmitting MIMO related information in accordance with an example of the present invention;
Fig. 3 is a flowchart illustrating a method for transmitting MIMO related information in accordance with another example of the present invention;
Fig. 4 is a flowchart illustrating a method for transmitting MIMO related information in accordance with yet another example of the present invention;
Fig. 5 is a flowchart illustrating a method for transmitting MIMO related information in accordance with still another example of the present invention.

### Detailed Description of the Invention

As described above, LTE-A Rel-10 recommends that an LTE-A system should support downlink MIMO satisfying the following conditions:
1) for orthogonal DM-RS which the SU-MIMO should support and when the SU-MIMO support 1 to 8 layers (i.e. Rank) in total, when the Rank is 1 to 2, the DM-RS density is 12 Resource Elements (REs), and the OCC length is 2; when the Rank is 3 to 4, the DM-RS is 24 REs, and the OCC length is 2; when the Rank is 5 to 8, the DM-RS is 24 REs, and the OCC length is 4;
2) when the MU-MIMO should support at most 4 layers, each MU-MIMO supports at most 2 layers;
3) dynamic switching between SU-MIMO and MU-MIMO should be supported, i.e., supporting dynamic switching between Single User (SU) and Multiple Users (MU).

In addition, UEs in an LTE-A system may be classified into two types according to transparency of the UEs: transparent UEs and non-transparent UEs. A transparent UE refer to a UE which can only obtain information for data demodulation of the UE itself, and can not obtain whether there are other UEs on the same RB. That is, a transparent UE does not know whether the UE itself is SU-MIMO or MU-MIMO. MU-MIMO techniques based on the transparent UEs are referred to as transparent MU-MIMO techniques. A non-transparent UE refers to a UE which can obtain information of UEs on the same RB besides information for the data demodulation of the UE itself, e.g. the Rank of RB allocated to the non-transparent UE and DM-RS ports of other UEs sharing the RB. That is, the non-transparent UE can know whether the UE itself is SU-MIMO or MU-MIMO. MU-MIMO techniques based on the non-transparent UEs are referred to as non-transparent MU-MIMO techniques. At present, there is no final decision on whether to adopt the transparent MU-MIMO or the non-transparent MU-MIMO in the standardization organization. The present invention is based on transparent MU-MIMO techniques, thus is applicable to transparent MU-MIMO.

To accommodate LTE-A Rel-9, the present invention requires that when downlink MIMO is MU-MIMO, two orthogonal DM-RS ports and two scrambling sequences should be supported, the DM-RS density should be 12 REs, and the OCC length should be two.

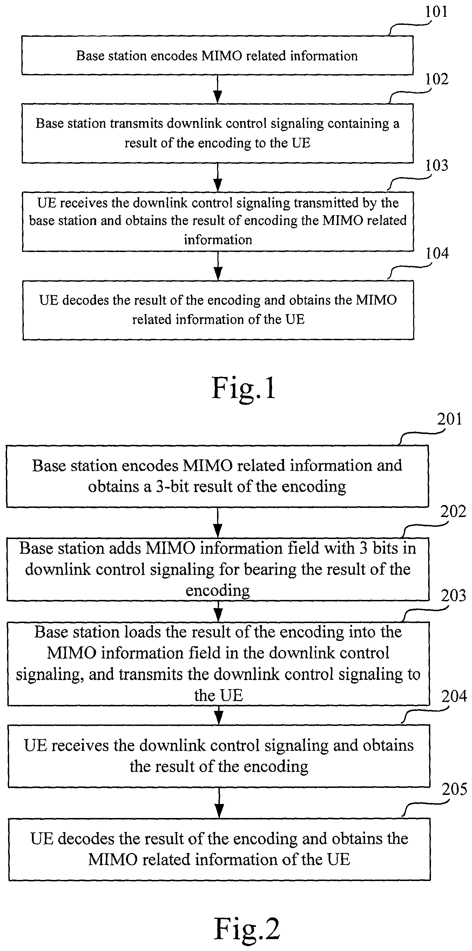

Based on the above restrictions, the present invention provides a method for transmitting MIMO related information. As shown in Fig. 1, the method mainly includes:
step 101 in which a base station encodes MIMO related information of a UE;
step 102 in which the base station transmits downlink control signaling including an encoding result of the MIMO related information to the UE;
step 103 in which the UE receives the downlink control signaling transmitted by the base station, obtains the encoding result; and
step 104 in which the UE decodes the encoding result to obtain the MIMO related information of the UE.

The MIMO related information of the present invention includes: the Rank (i.e. number of layers) of the UE, DM-RS port (i.e. antenna port) of the UE, scrambling identity (i.e. SCID) of the DM-RS of the UE, or further includes DM-RS density and OCC length. The MIMO related information may further include a transmission mode, e.g. Transmit diversity, of the UE when only one codeword is enabled. Those information is necessary for the UE to perform data demodulation.

The transmitting method of the present invention will be hereinafter described in detail with reference to preferred examples.

In an example, eight antenna ports are supported.

According to research, when an LTE-A system supports eight antenna ports and both of the two codewords of the UE are enabled, the UE may only be in any one of the following eight states listed in Table 1. Each state sequence in Table 1 corresponds to MIMO related information determined, such as the Rank (i.e. number of layers) of the UE, the DM-RS port (i.e. antenna port) of the UE, the scrambling identity (i.e. SCID) of the DM-RS of the UE. In addition, the DM-RS density and OCC length of the UE in each state in Table 1 can be uniquely determined according to the Rank (i.e. number of layers) of the UE, the DM-RS port (i.e. antenna port) of the UE, the scrambling identity (i.e. SCID) of the DM-RS of the UE.

**Table 1**

| State sequence | UE Rank | DM-RS Port | DM-RS density | OCC length | MIMO mode | SCID |
|---|---|---|---|---|---|---|
| state 0 | Rank 2 | port {7, 8} | 12 | 2 | SU/MU | 0 |
| state 1 | Rank 2 | port {7, 8} | 12 | 2 | SU/MU | I |
| state 2 | Rank 3 | port {7, 8, 9} | 24 | 2 | SU | default |
| state 3 | Rank 4 | port {7, 8, 9, 10} | 24 | 2 | SU | default |
| state 4 | Rank 5 | port {7, 8, 9, 10, 11} | 24 | 4 | SU | default |
| state 5 | Rank 6 | port {7, 8, 9, 10, 11, 12} | 24 | 4 | SU | default |
| state 6 | Rank 7 | port {7, 8, 9, 10, 11, 12, 13} | 24 | 4 | SU | default |
| state 7 | Rank 8 | port {7, 8, 9, 10, 11, 12, 13, 14} | 24 | 4 | SU | default |

If the LTE-A system supports eight antenna ports and only one of the two codewords of the UE is enabled, the UE may be in any one of the following four states listed in the following Table 2. Each state sequence in Table 2 also corresponds to MIMO related information determined, such as the Rank (i.e. number of layers) of the UE, the DM-RS port (i.e. antenna port) of the UE, the scrambling identity (i.e. SCID) of the DM-RS of the UE. In addition, the DM-RS density and OCC length of the UE in each state in Table 2 can be uniquely determined according to the Rank (i.e. number of layers) of the UE, the DM-RS port (i.e. antenna port) of the UE, the scrambling identity (i.e. SCID) of the DM-RS of the UE.

**Table 2**

| State sequence | UE Rank | DM-RS Port | DM-RS density | OCC length | MIMO mode | SCID |
|---|---|---|---|---|---|---|
| state 8 | Rank 1 | port {7} | 12 | 2 | SU/MU | 0 |
| state 9 | Rank 1 | port {7} | 12 | 2 | SU/MU | 1 |
| state 10 | Rank 1 | port {8} | 12 | 2 | SU/MU | 0 |
| state 11 | Rank 1 | port {8} | 12 | 2 | SU/MU | 1 |

Table 1 and Table 2 list 12 states in total, and MIMO related information for each state has been determined. Whether one or two of the two codewords of the UE is enabled can be indicated by both a modulation and coding scheme (MCS) field and a redundancy version (RV) field corresponding to each codeword in the downlink control signaling. For example, when an MCS field corresponding to one codeword in the downlink control signaling is 0 and the RV field corresponding to the codeword is 1, it indicates that the codeword is disabled; otherwise, it indicates that the codeword is not enabled. Therefore, in this example, only three bits are needed for encoding the MIMO related information.

The following Table 3 illustrates a result obtained by encoding the MIMO related information using 3 bits.

**Table 3**

| Result of encoding MIMO related information | State sequence |
|---|---|
| 000 | state 0 |
| 001 | state 1 |
| 010 | state 2 |
| 011 | state 3 |
| 100 | state 4 |
| 101 | state 5 |
| 110 | state 6 |
| 111 | state 7 |
| 000 | state 8 |
| 110 | state 9 |
| 011 | state 10 |
| 101 | state 11 |

In addition, states 8-11 and states 0-3 can be distinguished from each other by utilizing the value of the MCS field and the RV field of the two codewords in the downlink control signaling. It should be noted that the above Table 3 is merely an example, any other encoding schemes may also be adopted to establish the relation which associates a state sequence with a result of encoding MIMO related information.

It should also be noted that, besides the above 12 states, one more state may also be added, which may be denoted as State 16 to indicate a transmission mode such as Transmit diversity of the UE when only one codeword is enabled. As described above, whether both or one of the two codewords of the UE is enabled can be indicated through both the MSC field and the RV field corresponding to each of the codewords in the downlink control signaling, and therefore, the encoding can still adopt three bits. For example, an item may be added to the Table 3, which indicates that the UE is in State 16 when the result of encoding is 111.

Based on the above research, this example provides a transmitting method. As shown in Fig. 2, the method mainly includes:
step 201 in which a base station encodes MIMO related information to obtain a three-bit result of the encoding;
step 202 in which the base station adds a MIMO information field with three bits to the downlink control signaling for bearing the result of the encoding;
step 203 in which the base station loads the result of the encoding into the MIMO information field of the downlink control signaling, and transmits the downlink control signaling to the UE;
step 204 in which the UE receives the downlink control signaling and obtains the result of the encoding; and
step 205 in which the UE decodes the result of the encoding to obtain the MIMO related information of the UE.

This example further defines a format of the downlink control signaling, i.e. downlink control information (DCI) format. To distinguish from the DCI format defined in LTE-A Rel-9, the newly-defined DCI format is referred to as DCI format 2C.

In this example, the structure of the newly-defined DCI format 2C is as shown in Table 4.

**Table 4**

| Field | Length (bit) |
|---|---|
| Resource allocation header | 0 or 1 |
| Resource block assignment | |
| TPC command of PUCCH | 2 |
| Downlink Assignment Index | 2 |
| HARQ process ID | 3 or 4 |
| TB 1 MCS | 5 |
| TB 1 NDI | 1 |
| TB 1 RV | 2 |
| TB 2 MCS | 5 |
| TB 2 NDI | 1 |
| TB 2 RV | 2 |
| MIMO information field | 3 |

As can be seen from Table 4, the DCI format 2C provided by the example differs from existing DCI format 2 or DCI format 2A defined in LTE-A Rel-8 in that: the precoding information field of DCI format 2 or DCI format 2A is modified to a MIMO information field with other fields unchanged. The DCI format 2C of the example differs from existing DCI format 2B defined in LTE-A Rel-9 in that: the SCID field of DCI format 2B is removed and a MIMO information field with three bits is added while other fields keep unchanged.

Specifically, in this example, the base station first encodes the MIMO related information according to an encoding method, such as the one shown in Table 3, to obtain a three-bit result of encoding; loads the three-bit result into the MIMO information field of a DCI format 2C signaling, and transmits the DCI format 2C signaling to the UE. After receiving the DCI format 2C signaling transmitted by the base station, the UE obtains the value of the MIMO information field, decodes the result of the encoding obtained according to the encoding method such as the one shown in Table 3, obtains the state of the UE, and thereby obtains the MIMO related information of the UE, such as the Rank (i.e. number of layers) of the UE, the DM-RS port (i.e. antenna port) of the UE, the scrambling identity (i.e. SCID) of the DM-RS of the UE. And then, the DM-RS density and the OCC length are determined according to the Rank (i.e. number of layers) of the UE, the DM-RS port (i.e. antenna port) of the UE, the scrambling identity (i.e. SCID) of the DM-RS of the UE.

According to this example, the base station can transmit MIMO related information to the UE simply by adding a MIMO information field with three bits to existing DCI format signaling.

In another example, eight antenna ports are supported also.

As the foregoing description, when an LTE-A system supports eight antenna ports and both of the two codewords of the UE are enabled, the UE may only be in one of the eight states listed in the above Table 1. If the LTE-A system supports eight antenna ports and only one of the two codewords of the UE is enabled, the UE may be in any one of the four states listed in the above Table 2.

Since the DCI format 2B defined in LTE-A Rel-9 includes an SCID field of one bit for bearing the DM-RS SCID, the SCID field can be utilized for bearing the MIMO related information.

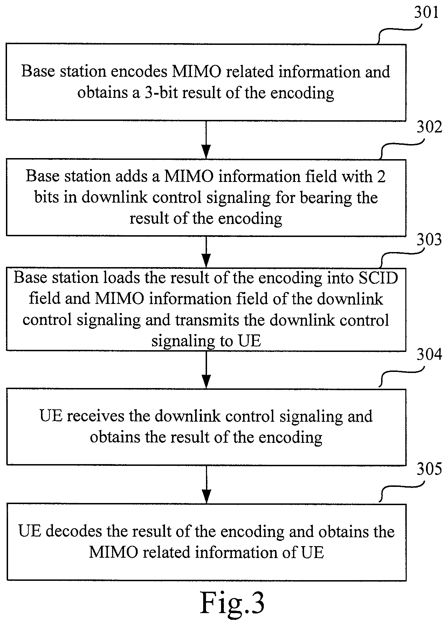

Based on the above research, this example provides a transmitting method. As shown in Fig. 3, the method mainly includes:
step 301 in which a base station encodes MIMO related information to obtain a three-bit result of the encoding;
step 302 in which the base station adds a MIMO information field with two bits to the downlink control signaling to bear the result of the encoding together with the SCID field;
step 303 in which the base station loads the result of the encoding into the MIMO information field and the SCID field of the downlink control signaling, and transmits the downlink control signaling to the UE;
step 304 in which the UE receives the downlink control signaling, and obtains the result of the encoding; and
step 305 in which the UE decodes the result of the encoding to obtain the MIMO related information of the UE.

This example further defines a format for the above downlink control signaling, which is also referred to as DCI format 2C.

In this example, the structure of the newly-defined DCI format 2C is as shown in Table 5.

**Table 5**

| Field | Length (bit) |
|---|---|
| Resource allocation header | 0 or 1 |
| Resource block assignment | |
| TPC command of PUCCH | 2 |
| Downlink Assignment Index | 2 |
| HARQ process ID | 3 or 4 |
| SCID | 1 |
| TB 1 MCS | 5 |
| TB 1 NDI | 1 |
| TB 1 RV | 2 |
| TB 2 MCS | 5 |
| TB 2 NDI | 1 |
| TB 2 RV | 2 |
| MIMO information field | 2 |

It can be seen from Table 5 that the DCI format 2C of the example differs from existing DCI format 2B defined in LTE-A Rel-9 in that: a MIMO information field with two bits is added while other fields keep unchanged.

Table 6 illustrates an example of utilizing the SCID field and the MIMO information field together to bear results of encoding the MIMO related information. It should be noted that the Table 6 is merely an example, and any other encoding schemes may also be adopted to establish the relation which associates a state sequence with the value of the SCID field and the MIMO information field.

**Table 6**

| SCID field | MIMO information field | Result of encoding MIMO related information | State sequence |
|---|---|---|---|
| 0 | 00 | 000 | state 0 |
| 1 | 00 | 100 | state 1 |
| 0 | 01 | 001 | state 2 |
| 1 | 01 | 101 | state 3 |
| 0 | 10 | 010 | state 4 |
| 1 | 10 | 110 | state 5 |
| 0 | 11 | 011 | state 6 |
| 1 | 11 | 111 | state 7 |
| 0 | 00 | 000 | state 8 |
| 0 | 10 | 010 | state 9 |
| 1 | 11 | 111 | state 10 |
| 1 | 01 | 101 | state 11 |

As described above, besides the 12 states, State 16 may further be added to indicate a transmission mode, e.g., Transmit diversity, of the UE when only one codeword is enabled. In this case, the MIMO related information can still be encoded into three bits. For example, one entry may be added to the above Table 3, indicating that the UE is in State 16 when the result of the encoding is 001, and in this case, the SCID is set as 0 and the MIMO information field is set as 01.

In this example, the base station first encodes the MIMO related information according to an encoding method, e.g. the one shown in Table 3, to obtain a three-bit result of the encoding; loads the three-bit result of the encoding into the SCID field and the MIMO information field of DCI format 2C signaling, and transmits the DCI format 2C signaling to the UE. After receiving the DCI format 2C signaling transmitted by the base station, the UE obtains the value of the MIMO information field, decodes the result of the encoding according to the encoding method such as the one shown in Table 6, obtains the state of the UE, and thereby obtains the MIMO related information of the UE, such as the Rank (i.e. number of layers) of the UE, the DM-RS port (i.e. antenna port) of the UE, the scrambling identity (i.e. SCID) of the DM-RS of the UE, and then further determines the DM-RS density and the OCC length.

According to this example, when the DCI format signaling already includes an SCID field, the base station may transmit the MIMO related information to the UE simply by adding a MIMO information field with two bits in the DCI format signaling.

In the above two examples, four or three results of encoding the MIMO information will not be used and are referred to as reserved information.

It should be noted that the method in the above two examples may also be applied to a LTE-A system supporting four antenna ports or two antenna ports, and in this case there will be more of such reserved information.

In yet another example, four antenna ports supported.

According to research, when an LTE-A system supports four antenna ports and both of the two codewords of the UE are enabled, the UE may be in any one of the following four states as listed in Table 1.

**Table 7**

| State sequence | UE Rank | DM-RS Port | DM-RS density | OCC length | MIMO mode | SCID |
|---|---|---|---|---|---|---|
| state 0 | Rank 2 | port {7, 8} | 12 | 2 | SU/MU | 0 |
| state 1 | Rank 2 | port {7, 8} | 12 | 2 | SU/MU | 1 |
| state 2 | Rank 3 | port {7, 8, 9} | 24 | 2 | SU | default |
| state 3 | Rank 4 | port {7, 8, 9, 10} | 24 | 2 | SU | default |

If the LTE-A system supports four antenna ports and only one of the two codewords of the UE is enabled, the UE may be in any one of the following four states listed in the following Table 8.

**Table 8**

| State sequence | UE Rank | DM-RS Port | DM-RS density | OCC length | MIMO mode | SCID |
|---|---|---|---|---|---|---|
| state 4 | Rank 1 | port {7} | 12 | 2 | SU/MU | 0 |
| state 5 | Rank 1 | port {7} | 12 | 2 | SU/MU | 1 |
| state 6 | Rank 1 | port {8} | 12 | 2 | SU/MU | 0 |
| state 7 | Rank 1 | port {8} | 12 | 2 | SU/MU | 1 |

A total of eight states are listed in Table 7 and Table 8. According to the above, whether one or both of the two codewords of the UE are enabled can be indicated by both an MCS field and an RV field corresponding to each codeword in the downlink control signaling. Therefore, in this example, only two bits are needed for encoding the MIMO related information.

The following Table 9 illustrates a result obtained by encoding the MIMO related information using two bits.

**Table 9**

| Result of encoding MIMO related information | State sequence |
|---|---|
| 00 | state 0 |
| 01 | state 1 |
| 10 | state 2 |
| 11 | state 3 |
| 00 | state 4 |
| 01 | state 5 |
| 10 | state 6 |
| 11 | state 7 |

In the above table, states 4-7 and states 0-3 can be distinguished from each other by utilizing values of the MCS field and the RV field of the two codewords in the downlink control signaling. It should be noted that the above Table 9 is merely an example, and that any other encoding schemes may also be adopted to establish the relation which associates a state sequence with a result of encoding MIMO related information.

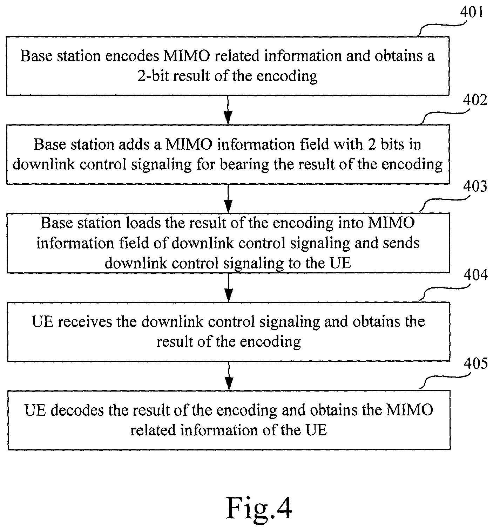

Based on the above research, this example provides a transmitting method. As shown in Fig. 4, the method mainly includes:
step 401 in which a base station encodes MIMO related information to obtain a two-bit result of the encoding;
step 402 in which the base station adds a MIMO information field with two bits to the downlink control signaling for bearing the result of the encoding;
step 403 in which the base station loads the result of the encoding into the MIMO information field of the downlink control signaling and transmits the downlink control signaling to the UE;
step 404 in which the UE receives the downlink control signaling and obtains the result of the encoding; and
step 405 in which the UE decodes the result of the encoding to obtain the MIMO related information of the UE.

This example further defines a format for the above downlink control signaling, which is also referred to as DCI format 2C. In this example, the structure of the newly-defined DCI format 2C is as shown in Table 10.

**Table 10**

| Field | Length (bit) |
|---|---|
| Resource allocation header | 0 or 1 |
| Resource block assignment | |
| TPC command of PUCCH | 2 |
| Downlink Assignment Index | 2 |
| HARQ process ID | 3 or 4 |
| TB 1 MCS | 5 |
| TB 1 NDI | 1 |
| TB 1 RV | 2 |
| TB 2 MCS | 5 |
| TB 2 NDI | 1 |
| TB 2 RV | 2 |
| MIMO information field | 2 |

It can be seen from Table 10 that the DCI format 2C of this example differs from the DCI format 2C of the example described firstly in the foregoing in that the length of the MIMO information field of this example is two bits.

In this example, the base station first encodes the MIMO related information according to an encoding method, e.g. the one shown in Table 9, to obtain a two-bit result of encoding; loads the two-bit result of encoding into the SCID field and the MIMO information field of DCI format 2C signaling, and transmits the DCI format 2C signaling to the UE. After receiving the DCI format 2C signaling transmitted by the base station, the UE obtains the value of the MIMO information field, decodes the result of the encoding according to the encoding method such as the one shown in Table 9, obtains the state of the UE, and then obtains the MIMO related information of the UE by utilizing both Table 7 and Table 8 together.

According to this example, the base station can transmit the MIMO related information to the UE simply by adding a MIMO information field with two bits to existing DCI format signaling.

In this example, when there is a need to add State 16 for representing a transmission mode, e.g. Transmit diversity, of the UE when only one codeword is enabled, two bits are not enough for encoding the MIMO related information, and thus three bits may be used for encoding the MIMO related information. The detailed implementation can refer to the example described firstly in the foregoing. When eight antenna ports are supported, a UE may at most have 13 states; but when four antenna ports are supported, the UE may at most have 9 states. Thus, compared with the case that eight antenna ports are supported, the case that four antenna ports are supported may have more reserved information when three bits are used for encoding the MIMO related information.

In still another example, four antenna ports are supported also.

According to the foregoing, when an LTE-A system supports four antenna ports and both of the two codewords of the UE are enabled, the UE may only be in any one of the four states listed in the above Table 7. If the LTE-A system supports four antenna ports and only one of the two codewords of the UE is enabled, the UE may be in any one of the four states listed in the above Table 8.

Because the DCI format 2B defined in LTE-A Rel-9 includes an SCID field with one bit for bearing the DM-RS SCID, the SCID field can be utilized for bearing the MIMO related information in this example.

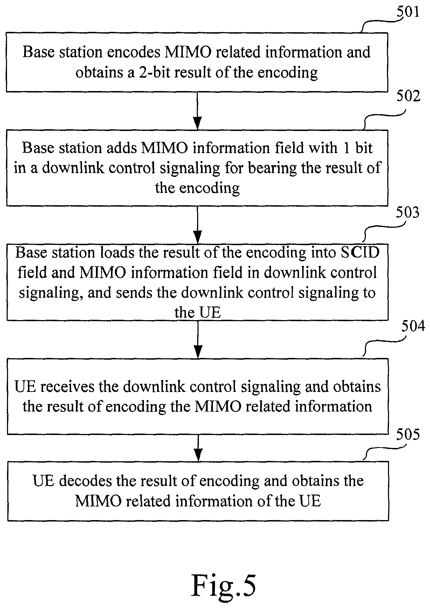

Based on the above, this example provides a transmitting method. As shown in Fig. 5, the method mainly includes:
step 501 in which a base station encodes MIMO related information to obtain a two-bit result of the encoding;
step 502 in which the base station adds a MIMO information field with one bit to the downlink control signaling for bearing the result of the encoding together with the SCID field;
step 503 in which the base station loads the result of the encoding into the MIMO information field and the SCID field of the downlink control signaling, and transmits the downlink control signaling to the UE;
step 504 in which the UE receives the downlink control signaling and obtains the result of the encoding;
step 505 in which the UE decodes the result of the encoding to obtain the MIMO related information of the UE.

This example further defines a format for the above downlink control signaling, which is also referred to as DCI format 2C.

In this example, the structure of the newly-defined DCI format 2C is as shown in Table 11.

**Table 11**

| Field | Length (bit) |
|---|---|
| Resource allocation header | 0 or 1 |
| Resource block assignment | |
| TPC command of PUCCH | 2 |
| Downlink Assignment Index | 2 |
| HARQ process ID | 3 or 4 |
| SCID | 1 |
| TB 1 MCS | 5 |
| TB 1 NDI | 1 |
| TB 1 RV | 2 |
| TB 2 MCS | 5 |
| TB 2 NDI | 1 |
| TB 2 RV | 2 |
| MIMO information field | 1 |

It can be seen from Table 11 that the DCI format 2C of this example differs from the DCI format 2C described secondly in the foregoing in that the length of the MIMO information field in this example is one bit.

Table 12 illustrates an example of utilizing a SCID field and a MIMO information field together to bear results of encoding the MIMO related information. It should be noted that the Table 12 is merely an example and any other encoding schemes may also be adopted to establish the relation which associates a state sequence with the values of the SCID field and the MIMO information field.

**Table 12**

| SCID field | MIMO information field | result of encoding MIMO related information | State sequence |
|---|---|---|---|
| 0 | 0 | 00 | state 0 |
| 1 | 0 | 10 | state 1 |
| 0 | 1 | 01 | state 2 |
| 1 | 1 | 11 | state 3 |
| 0 | 0 | 00 | state 4 |
| 1 | 0 | 10 | state 5 |
| 0 | 1 | 01 | state 6 |
| 1 | 1 | 11 | state 7 |

In this example, the base station first encodes the MIMO related information according to an encoding method, e.g. the one shown in Table 12, to obtain a two-bit result of encoding; loads the two-bit result into the SCID field and the MIMO information field of DCI format 2C signaling, and transmits the DCI format 2C signaling to the UE. After receiving the DCI format 2C signaling transmitted by the base station, the UE obtains the value of the MIMO information field, decodes the result of the encoding according to the encoding method such as the one shown in Table 12, obtains the state of the UE, and then obtains the MIMO related information of the UE by utilizing both Table 7 and Table 8 together.

According to this example, when the DCI format signaling already includes an SCID field, the base station may transmit the MIMO related information to the UE simply by adding a MIMO information field with one bit in the DCI format signaling.

In this example, when there is a need to add State 16 for representing a transmission mode, e.g. Transmit diversity, of the UE when only one codeword is enabled, two bits are not enough for encoding the MIMO related information, and therefore three bits may be used for encoding the MIMO related information. Detailed implementation can refer to the example described secondly in the foregoing. When eight antenna ports are supported, a UE may at most have 13 states; but when four antenna ports are supported, the UE may at most have 9 states. Thus, compared with the case that eight antenna ports are supported, the case that four antenna ports are supported may have more reserved information when three bits are used to encode the MIMO related information.

In yet another example:
For the MU-MIMO, the LTE-A Rel-9 at most supports four layers, and each MU-MIMO at most supports two layers; while for the SU-MIMO, it at most supports Rank 2. Therefore, when eight antenna ports are supported, when dynamic switching between SU and MU needs to be supported, i.e. when the UE is in the state 0 or 1 shown in Table 1, or in any of states 8-11 shown in Table 2, the DCI format 2B defined in LTE-A Rel-9 can be directly utilized for transmitting the MIMO related information to the UE; when dynamic switching between SU and MU need not be supported, i.e. when the UE is in any of states 2-7 shown in Table 1, the MIMO information field with three bits can be used for transmitting the MIMO related information to the UE according to the method shown in Fig. 2. The newly-defined DCI format is similar to that shown in Table 5 except that the SCID field is not needed and is omitted. Therefore, when four antenna ports are supported, when dynamic switching between SU and MU needs to be supported, i.e. when the UE is in the state 0 or 1 shown in Table 7, or in any of states 4-7 shown in Table 8, the DCI format 2B defined in LTE-A Rel-9 can be directly utilized for transmitting the MIMO related information to the UE; when dynamic switching between SU and MU need not be supported, i.e. when the UE is in state 2 or 3 shown in Table 7, the MIMO information field with one bit can be added to the DCI format signaling for transmitting the MIMO related information to the UE. The newly-defined DCI format is similar to that shown in Table 5 except that the length of the MIMO information field is one bit and the SCID field thus is omitted.

It should be noted that in the above five examples, when only one codeword is enabled, the Rank higher than Rank 1 is applicable only to data re-transmission. Specifically, when eight antenna ports are supported, only one codeword is enabled and the Rank is higher than Rank 1, the UE may be in any one of the following four states. In order to be distinguished from the states 1-11 in the first two examples, states 12-15 are used for denoting the four states in this example. The following Table 13 shows the MIMO related information in the above four states. It should be noted that the state 13 in the following Table 13 is optional, i.e. when eight antenna ports are supported and only one codeword is enabled and the Rank is higher than Rank 1, the UE may be in one of the following three states: state 12, state 14 and state 15.

**Table 13**

| State sequence | UE Rank | DM-RS Port | DM-RS density | OCC length | re-transmitted or not | MIMO mode | SCID |
|---|---|---|---|---|---|---|---|
| state 12 | Rank 2 | port {7, 8} | 12 | 2 | Yes | SU/MU | 0 |
| state 13 | Rank 2 | port {7, 8} | 12 | 2 | Yes | SU/MU | 1 |
| state 14 | Rank 3 | port {7, 8, 9} | 24 | 2 | Yes | SU | default |
| state 15 | Rank 4 | port {7, 8, 9, 10} | 24 | 2 | Yes | SU | default |

In this case, the base station may inform the UE to perform data re-transmission via a new New Data Indication (NDI) field corresponding to the enabled codeword, and inform the UE of the MIMO related information via the newly-added MIMO information field when the UE is in one of the above four or three states.

According to the above example described firstly in the foregoing, the base station may encode the MIMO related information of a UE when only one codeword is enabled and the Rank is higher than Rank 1, load the result of the encoding into the newly-added MIMO information field, and inform the UE that it is data re-transmission via the NDI field corresponding to the enabled codeword. The following Table 14 illustrates a relation which associates each of states 12-15 with the newly-added MIMO information field and the NDI field corresponding to the enabled codeword.

**Table 14**

| NDI | result of encoding MIMO related information | MIMO information field | State sequence |
|---|---|---|---|
| not inverted | 000 | 000 | state 12 |
| not inverted | 110 | 110 | reserved or state 13 |
| not inverted | 011 | 011 | state 14 |
| not inverted | 101 | 101 | state 15 |

In this example, the base station first encodes the MIMO related information according to an encoding method, e.g. the one shown in Table 14, to obtain a three-bit result of encoding; loads the three-bit result into the MIMO information field of DCI format 2C signaling, sets the NDI corresponding to the enabled codeword as not-inverted, and transmits the DCI format 2C signaling to the UE. After receiving the DCI format 2C signaling transmitted by the base station, the UE detects that the DCI format 2C signaling is for data re-transmission based on the NDI corresponding to the enabled codeword, obtains the value of the MIMO information field, and decodes the result of the encoding according to the encoding method such as the one shown in Table 14, and obtains the MIMO related information of the UE by utilizing Table 13.

According to the example described secondly in the forgoing, the base station may encode the MIMO related information of a UE when only one codeword is enabled and the Rank is higher than Rank 1, and load the result of the encoding into the SCID field and the newly-added MIMO information field, and inform the UE that it is data re-transmission via the NDI field corresponding to the enabled codeword. The following Table 15 illustrates a relation which associates each of states 12-15 with the newly-added MIMO information field, the SCID field and the NDI field corresponding to the enabled codeword.

**Table 15**

| NDI | result of encoding MIMO related information | SCID | MIMO information field | State sequence |
|---|---|---|---|---|
| Not-inverted | 000 | 0 | 00 | state 12 |
| Not-inverted | 101 | 1 | 01 | reserved or state 13 |
| Not-inverted | 010 | 0 | 10 | state 14 |
| Not-inverted | 111 | 1 | 11 | state 15 |

In this situation, the base station first encodes the MIMO related information according to an encoding method, e.g. the one shown in Table 15, to obtain a three-bit result of encoding; loads the three-bit result into the SCID field and the MIMO information field of DCI format 2C signaling, sets the NDI corresponding to the enabled codeword as not-inverted, and transmits the DCI format 2C signaling to the UE. After receiving the DCI format 2C signaling transmitted by the base station, the UE detects that the DCI format 2C signaling is for data re-transmission based on the NDI corresponding to the enabled codeword, obtains the values of the SCID field and the MIMO information field from the NDI, decodes the result of the encoding according to the encoding method such as the one shown in Table 15, and obtains the MIMO related information of the UE by utilizing Table 13.

In addition, from the Table 3 of the example described firstly in the foregoing and the Table 6 of the example described secondly in the foregoing, it can be seen that the first two examples, when only one codeword is enabled, the UE only has four states, or five states when state 16 exists. However, a three-bit result of encoding the MIMO relation information can indicate eight states, and therefore, four or three of the results of encoding are reserved information which is unused in first two examples respectively. Based on the above research, as an alternative of the above scheme, reserved information can be used for informing the UE of the state that only one codeword is enabled and the Rank is higher than Rank 1. For example, when there are four states as the reserved information, the reserved information may be used for informing the UE of four re-transmission states or three re-transmission states (e.g. state 12, state 14 and state 15) when only one codeword is enabled and the Rank is higher than Rank 1. When there are three states as the reserved information, the reserved information may be used for informing the UE of three re-transmission states (e.g. state 12, state 14 and state 15) when only one codeword is enabled and the Rank is higher than Rank 1. That is, when only one codeword is enabled, the four or five non-retransmission states corresponding to Rank 1 and the four or three retransmission states corresponding to the Rank higher than Rank 1 are associated for encoding, and a three-bit result of encoding MIMO related information is adopted to denote the seven or eight states without utilizing the NDI field corresponding to the enabled codeword.

Specifically, according to the example described firstly in the foregoing, the base station may encode MIMO related information of a UE (including MIMO related information of the UE when only one codeword is enabled and the Rank is higher than Rank 1), and load the result of the encoding into the newly-added MIMO information field. The following Table 16 illustrates a relation which associates each state of UE with a result of encoding MIMO related information and the newly-added MIMO related information.

**Table 16**

| Result of encoding MIMO related information | MIMO information field | State sequence |
|---|---|---|
| 000 | 000 | state 0 |
| 001 | 001 | state 1 |
| 010 | 010 | state 2 |
| 011 | 011 | state 3 |
| 100 | 100 | state 4 |
| 101 | 101 | state 5 |
| 110 | 110 | state 6 |
| 111 | 111 | state 7 |
| 000 | 000 | state 8 |
| 110 | 110 | state 9 |
| 011 | 011 | state 10 |
| 101 | 101 | state 11 |
| 001 | 001 | state 12 |
| 100 | 100 | reserved or state 13 or 16 |
| 010 | 010 | state 14 |
| 111 | 111 | state 15 |

In this situation, the base station first encodes the MIMO related information according to an encoding method, e.g. the one shown in Table 16, to obtain a three-bit result of encoding; loads the three-bit result into the MIMO information field of DCI format 2C signaling, and transmits the DCI format 2C signaling to the UE. After receiving the DCI format 2C signaling transmitted by the base station, the UE obtains the value of the MIMO information field, decodes the result of the encoding according to the encoding method such as the one shown in Table 16, obtains the state of the UE, and then obtains the MIMO related information of the UE by utilizing Table 1, Table 2 and Table 13 in combination.

Specifically, corresponding to the example described secondly in the foregoing, the base station may encode MIMO related information of a UE (including MIMO related information of the UE when only one codeword is enabled and the Rank is higher than Rank 1), and load the result of the encoding into the SCID field and the newly-added MIMO information field. The following Table 17 illustrates a relation which associates each state of UE with a result of encoding MIMO related information, the SCID field and the newly-added MIMO related information.

**Table 17**

| Result of encoding MIMO related information | SCID | MIMO information field | State sequence |
|---|---|---|---|
| 000 | 0 | 00 | state 0 |
| 001 | 0 | 01 | state 1 |
| 010 | 0 | 10 | state 2 |
| 011 | 0 | 11 | state 3 |
| 100 | 1 | 00 | state 4 |
| 101 | 1 | 01 | state 5 |
| 110 | 1 | 10 | state 6 |
| 111 | 1 | 11 | state 7 |
| 000 | 0 | 00 | state 8 |
| 110 | 1 | 10 | state 9 |
| 011 | 0 | 11 | state 10 |
| 101 | 1 | 01 | state 11 |
| 001 | 0 | 01 | state 12 |
| 100 | 1 | 00 | reserved or state 13 or 16 |
| 010 | 0 | 10 | state 14 |
| 111 | 1 | 11 | state 15 |

In this situation, the base station first encodes the MIMO related information according to an encoding method, e.g. the one shown in Table 17, to obtain a three-bit result of encoding; loads the three-bit result into the SCID field and the MIMO information field of DCI format 2C signaling, and transmits the DCI format 2C signaling to the UE. After receiving the DCI format 2C signaling transmitted by the base station, the UE obtains the values of the SCID field and the MIMO information field, decodes the result of the encoding according to the encoding method such as the one shown in Table 17, and obtains the MIMO related information of the UE by utilizing Table 1, Table 2 and Table 13 in combination.

It should be noted that the above Table 14-Table 17 are merely exemplary manners of encoding MIMO related information. Those skilled in the art can understand that other encoding manners can also be adopted for establishing the relation which associates each state sequence with a result of encoding the MIMO related information.

In addition, it should be noted that the above method is not only applicable to situations in which eight antenna ports are supported, but also applicable to LTE-A systems which support four or two antenna ports.

Furthermore, in the above five examples, when only one codeword is enabled, the NDI field corresponding to the disabled codeword is idle and can be encoded together with the newly-added MIMO information field (or further with the SCID field), i.e. the NDI field and the MIMO information field are used together to bear the result of encoding MIMO relation information.

## Claims

1. A method for transmitting multiple input and multiple output, MIMO related information, comprising:
encoding (S201), by a base station, MIMO related information of a user equipment, UE, and transmitting (S203) downlink control signaling comprising a result of encoding the MIMO related information to the UE;
receiving (S204), by the UE, the downlink control signaling transmitted by the base station, obtaining (S204) the result of the encoding the MIMO related information, and obtaining the MIMO related information of the UE by decoding (S205) the result of the encoding the MIMO related information, the method being **characterized in that**
when eight antenna ports are supported and two codewords are enabled, the MIMO related information is selected from a first table defining states in which Rank 2 of the UE is associated with DM-RS ports and scrambling identity, SCID, of predetermined DM-RS and each of Rank 3 to Rank 8 is associated with DM-RS port, and
when only one codeword is enabled, the MIMO related information is selected from a second table defining at least a state in which Rank 1 is associated with a DM-RS port and SCID of DM-RS.

2. The method of claim 1, wherein encoding by the base station the MIMO related information of the UE comprises: encoding, by the base station, the MIMO related information to obtain the result of the encoding in three bits.

3. The method of claim 2, wherein transmitting the downlink control signaling comprising the result of the encoding to the UE comprises:
adding, by the base station, a MIMO information field with three bits to the downlink control signaling for bearing the result of the encoding; and
loading, by the base station, the result of the encoding into the MIMO information field of the downlink control signaling, and transmitting the downlink control signaling to the UE.

4. The method of claim 3, wherein adding by the base station the MIMO information field with three bits to the downlink control signaling comprises: removing a scrambling code identity field in a downlink control information format 2B in the downlink control signaling, and adding the MIMO information field with a length of three bits to generate a new DCI format of the downlink control signaling.

5. A base station configured to transmit multiple input and multiple output, MIMO, related information, comprising:
an encoding section configured to encode MIMO related information of a user equipment, UE; and
a transmitting section configured to transmit downlink control signaling comprising a result of encoding the MIMO related information to the UE,
the base station being **characterized in that**, when eight antenna ports are supported and two codewords are enabled, the MIMO related information is selected from a first table defining states in which Rank 2 of the UE is associated with DM-RS ports and scrambling identity, SCID, of predetermined DM-RS and each of Rank 3 to Rank 8 is associated with DM-RS port, and
when only one codeword is enabled, the MIMO related information is selected from a second table defining at least a state in which Rank 1 is associated with a DM-RS port and SCID of DM-RS.

6. A user equipment configured to receive multiple input and multiple output, MIMO, related information, comprising:
a receiving section configured to receive downlink control signaling transmitted from a base station; and
a decoding section configured to obtain a result of encoding the MIMO related information included in the downlink control signaling and decode the result of the encoding,
the user equipment being **characterized in that**, when eight antenna ports are supported and two codewords are enabled, the MIMO related information is selected from a first table defining states in which Rank 2 of the UE is associated with DM-RS ports and scrambling identity, SCID, of predetermined DM-RS and each of Rank 3 to Rank 8 is associated with DM-RS port, and
when only one codeword is enabled, the MIMO related information is selected from a second table defining at least a state in which Rank 1 is associated with a DM-RS port and SCID of DM-RS.

## Patentansprüche

1. Verfahren zur Übertragung von mit Mehrfach-Eingang-Mehrfach-Ausgang MIMO zusammenhängender Information, umfassend:
Codieren (S201) von mit MIMO zusammenhängender Information eines Anwenderendgeräts (UE) durch eine Basisstation und Senden (S203) einer Downlink - Steuersignalisierung an das UE, die ein Codierergebnis der mit MIMO zusammenhängenden Information umfasst;
Empfangen (S204) der von der Basisstation gesendeten Downlink-Steuersignalisierung durch das UE, Erhalten (S204) des Codierergebnisses der mit MIMO zusammenhängenden Information, und Erhalten der mit MIMO zusammenhängenden Information des UE durch Decodieren (S205) des Codierergebnisses der mit MIMO zusammenhängenden Information, wobei das Verfahren **dadurch gekennzeichnet ist, dass**
wenn acht Antennenanschlüsse unterstützt werden und zwei Codewörter aktiviert sind, die mit MIMO zusammenhängende Information aus einer ersten Tabelle ausgewählt wird, die Zustände definiert, in denen Rang 2 des UE mit DM-RS Anschlüssen und einer Scrambling-Kennung SCID eines vorbestimmten DM-RS verknüpft ist und jedes von Rangs 3 bis Rang 8 mit einem DM-RS Anschluss verknüpft ist, und
wenn nur ein Codewort aktiviert ist, die mit MIMO zusammenhängende Information aus einer zweiten Tabelle ausgewählt wird, die mindesten einen Zustand definiert, in dem Rang 1 mit einem DM-RS Anschluss und einer SCID des DM-RS verknüpft ist.

2. Verfahren nach Anspruch 1, wobei das Codieren der mit MIMO zusammenhängenden Information des UE durch die Basisstation umfasst: Codieren der mit MIMO zusammenhängenden Information durch die Basisstation, um das Codierergebnis in drei Bits zu erhalten.

3. Verfahren nach Anspruch 2, wobei das Senden der Downlink-Steuersignalisierung, die das Codierergebnis umfasst, an das UE umfasst:
Hinzufügen, durch die Basisstation, eines MIMO-Informationsfeldes mit drei Bits zur Downlink-Steuersignalisierung zum Tragen des Codierergebnisses; und
Laden, durch die Basisstation, des Codierergebnisses in das MIMO-Informationsfeld der Downlink-Steuersignalisierung und Übertragen der Downlink-Steuersignalisierung an das UE.

4. Verfahren nach Anspruch 3, wobei das Hinzufügen des MIMO-Informationsfeldes mit drei Bits zur Downlink-Steuersignalisierung durch die Basisstation umfasst: Entfernen eines Scrambling-Code-Kennungsfelds in einem Downlink-Steuerinformationsformat 2B von der Downlink-Steuersignalisierung und Hinzufügen des MIMO Informationsfelds mit einer Länge von drei Bits, um ein neues DCI-Format der Downlink-Steuersignalisierung zu erzeugen.

5. Basisstation, die eingerichtet ist, mit Mehrfach-Eingang-Mehrfach-Ausgang MIMO zusammenhängende Information zu übertragen, umfassend:
einen Codierabschnitt, der eingerichtet ist, mit MIMO zusammenhängende Information eines Anwenderendgeräts UE zu codieren; und
einen Sendeabschnitt, der eingerichtet ist, eine Downlink-Steuersignalisierung zum UE zu senden, die ein Codierergebnis der mit MIMO zusammenhängenden Information umfasst,
wobei die Basisstation **dadurch gekennzeichnet ist, dass**, wenn acht Antennenanschlüsse unterstützt werden und zwei Codewörter aktiviert sind, die mit MIMO zusammenhängende Information aus einer ersten Tabelle ausgewählt wird, die Zustände definiert, in denen Rang 2 des UE mit DM-RS Anschlüssen und mit einer Scrambling-Kennung SCID vorbestimmter DM-RS verknüpft ist, und jedes von Rangs 3 bis Rang 8 mit einem DM-RS Anschluss verknüpft ist, und
wenn nur ein Codewort aktiviert ist, die mit MIMO zusammenhängende Information aus einer zweiten Tabelle ausgewählt wird, die mindesten einen Zustand definiert, in dem Rang 1 mit einem DM-RS Anschluss und einer SCID des DM-RS verknüpft ist.

6. Anwenderendgerät, das dazu eingerichtet ist, mit Mehrfach-Eingang-Mehrfach-Ausgang MIMO zusammenhängende Information zu empfangen, umfassend:
einen Empfangsabschnitt, der dazu eingerichtet ist, von einer Basisstation gesendete Downlink-Steuersignalisierung zu empfangen; und
einen Decodierabschnitt, der dazu eingerichtet ist, ein Codierergebnis der mit MIMO zusammenhängenden Information zu erhalten, die in der Downlink-Steuersignalisierung enthalten ist und das Codierergebnis zu decodieren,
wobei das Anwenderendgerät **dadurch gekennzeichnet ist, dass**, wenn acht Antennenanschlüsse unterstützt werden und zwei Codewörter aktiviert sind, die mit MIMO zusammenhängende Information aus einer ersten Tabelle ausgewählt wird, die Zustände definiert, in denen Rang 2 des UE mit DM-RS-Anschlüssen einer Scrambling-Kennung SCID vorbestimmter DM-RS verknüpft ist, und jedes von Rangs 3 bis Rang 8 mit einem DM-RS Anschluss verknüpft ist, und
wenn nur ein Codewort aktiviert ist, die mit MIMO zusammenhängende Information aus einer zweiten Tabelle ausgewählt wird, die mindesten einen Zustand definiert, in dem Rang 1 mit einem DM-RS Anschluss und einer SCID des DM-RS verknüpft ist.

## Revendications

1. Procédé de transmission d'informations de type à entrées multiples et sorties multiples, MIMO, comprenant :
le codage (S201), par une station de base, d'informations de type MIMO d'un équipement utilisateur, UE, et la transmission (S203) d'une signalisation de commande en liaison descendante comprenant un résultat de codage des informations de type MIMO à l'UE ;
la réception (S204), par l'UE, de la signalisation de commande en liaison descendante transmise par la station de base, l'obtention (S204) du résultat du codage des informations de type MIMO, et l'obtention des informations de type MIMO de l'UE par décodage (205) du résultat du codage des informations de type MIMO, le procédé étant **caractérisé en ce que**
lorsque huit ports d'antenne sont pris en charge et deux mots de code sont activés, les informations de type MIMO sont sélectionnées dans une première table définissant des états dans lesquels le rang 2 de l'UE est associé à des ports DM-RS et à une identité de brouillage, SCID, de DM-RS prédéterminés et chacun du rang 3 au rang 8 est associé à un port DM-RS, et
lorsqu'un seul mot de code est activé, les informations de type MIMO sont sélectionnées dans une seconde table définissant au moins un état dans lequel le rang 1 est associé à un port DM-RS et à une SCID du DM-RS.

2. Procédé selon la revendication 1, dans lequel le codage par la station de base des informations de type MIMO de l'UE comprend : le codage, par la station de base, des informations de type MIMO pour obtenir le résultat du codage sur trois bits.

3. Procédé selon la revendication 2, dans lequel la transmission de la signalisation de commande en liaison descendante comprenant le résultat du codage à l'UE comprend :
l'ajout, par la station de base, d'un champ d'information MIMO à trois bits à la signalisation de commande en liaison descendante pour porter le résultat du codage ; et
le chargement, par la station de base, du résultat du codage dans le champ d'information MIMO de la signalisation de commande en liaison descendante, et la transmission de la signalisation de commande en liaison descendante à l'UE.

4. Procédé selon la revendication 3, dans lequel l'ajout par la station de base du champ d'information MIMO à trois bits à la signalisation de commande en liaison descendante comprend : la suppression d'un champ d'identité de code de brouillage dans un format d'information de commande en liaison descendante 2B dans la signalisation de commande en liaison descendante, et l'ajout du champ d'information MIMO d'une longueur de trois bits pour générer un nouveau format DCI de la signalisation de commande en liaison descendante.

5. Station de base configurée pour transmettre des informations de type à entrées multiples et sorties multiples, MIMO, comprenant :
une partie codage configurée pour coder des informations de type MIMO d'un équipement utilisateur, UE ; et
une partie transmission configurée pour transmettre une signalisation de commande en liaison descendante comprenant un résultat de codage des informations de type MIMO à l'UE,
la station de base étant **caractérisée en ce que**, lorsque huit ports d'antenne sont pris en charge et deux mots de code sont activés, les informations de type MIMO sont sélectionnées dans une première table définissant des états dans lesquels le rang 2 de l'UE est associé à des ports DM-RS et à une identité de brouillage, SCID, de DM-RS prédéterminés et chacun du rang 3 au rang 8 est associé à un port DM-RS, et
lorsqu'un seul mot de code est activé, les informations de type MIMO sont sélectionnées dans une seconde table définissant au moins un état dans lequel le rang 1 est associé à un port DM-RS et à une SCID du DM-RS.

6. Équipement utilisateur configuré pour recevoir des informations de type à entrées multiples et sorties multiples, MIMO, comprenant :
une partie réception configurée pour recevoir une signalisation de commande en liaison descendante transmise depuis une station de base ; et
une partie décodage configurée pour obtenir un résultat de codage des informations de type MIMO inclus dans la signalisation de commande en liaison descendante et pour décoder le résultat du codage,
l'équipement utilisateur étant **caractérisé en ce que**, lorsque huit ports d'antenne sont pris en charge et deux mots de code sont activés, les informations de type MIMO sont sélectionnées dans une première table définissant des états dans lesquels le rang 2 de l'UE est associé à des ports DM-RS et à une identité de brouillage, SCID, de DM-RS prédéterminés et chacun du rang 3 au rang 8 est associé à un port DM-RS, et
lorsqu'un seul mot de code est activé, les informations de type MIMO sont sélectionnées dans une seconde table définissant au moins un état dans lequel le rang 1 est associé à un port DM-RS et à une SCID du DM-RS.
